# FASCICULE DE BREVET EUROPEEN

(11) **EP 1 197 362 B1**
(45) Date de publication et mention de la délivrance du brevet: **17.03.2004**
(21) Numéro de dépôt: 01123564.5
(22) Date de dépôt: 01.10.2001
(51) Int. Cl.: B60G 17/015, B60G 17/02

(54) **Dispositif de suspension comportant un vérin électrique et un ressort en parallèle**
Aufhängungsvorrichtung mit einem elektrischen Stellantrieb mit einer parallelen Feder
Suspension device with an electric actuator and a spring in parallel

(30) Priorité: 11.10.2000 FR 0013106
(43) Date de publication de la demande: 17.04.2002
(73) Titulaire: Conception et Développement Michelin S.A., 1762 Givisiez (CH)
(72) Inventeur: Charaudeau, Jean-Jaques, 1741 Cottens (CH); Magne, Pierre Alain, 1782 Belfaux (CH)
(74) Mandataire: Bauvir, Jacques

(56) Documents cités:
- EP-A- 0 415 780
- EP-A- 0 878 333
- US-A- 5 740 039

## Description

La présente invention concerne le domaine des suspensions. En particulier, elle se rapporte à la suspension de véhicules, par exemple des voitures de tourisme. Plus précisément, elle se rapporte aux moyens utilisés pour permettre le débattement entre deux points (un point suspendu, par exemple lié à la caisse ou au châssis d'une voiture, c'est à dire à la masse suspendue, et un point non suspendu, par exemple solidaire d'un bras de suspension ou d'un porte-roue, c'est à dire solidaire de la masse non suspendue) tout en s'efforçant d'amoindrir les variations de la force développée par la suspension, vues par le point suspendu.

EP 0 878 333 décrit un dispositif de suspension selon le préambule de la revendication 1.

On sait que la suspension d'un véhicule comporte des dispositions constructives par lesquelles on guide le déplacement d'une roue ou des roues d'un essieu par rapport à la caisse (ou par rapport au châssis si le véhicule en est pourvu, ou encore entre caisse et châssis le cas échéant), et elle comporte des moyens contrôlant le débattement de chaque roue (une roue est un organe dit « non suspendu ») par rapport à la caisse (tout point situé sur la caisse est dit « suspendu »), pour porter la charge tout en maintenant une certaine garde au sol du véhicule (c'est la fonction d'un ressort) et pour empêcher l'entretien des oscillations survenant entre points suspendu et non suspendu à la suite d'une perturbation (c'est la fonction d'un amortisseur).

Un ressort est calculé pour supporter la charge du véhicule tout en maintenant une garde au sol suffisante au véhicule. Grâce à la fonction d'amortissement, les roues équipées de pneumatiques tendent à rester toujours en contact avec la route lorsque la suspension est sollicitée par les irrégularités de la route. Un amortisseur empêche l'entretien des oscillations survenant à la suite d'une perturbation, notamment les oscillations de la roue elle-même, que le pneumatique ne peut à lui seul atténuer suffisamment rapidement.

On sait que la conception d'une suspension se caractérise par la recherche d'un compromis entre des objectifs qui ont la réputation d'être au moins dans une large mesure contradictoires : le confort et la tenue de route. De nombreux efforts sont déployés pour trouver un compromis toujours meilleur. L'état de la technique connaît des suspensions dites actives ou semi-actives, dont le pilotage est maintenant rendu possible par les progrès de l'électronique. Dans de telles suspensions, des ordres sont transmis par voie électrique ou électro-hydraulique pour modifier en temps réel les caractéristiques de flexibilité et/ou d'amortissement de la suspension. Cela conduit à ajouter, aux dispositifs mécaniques ou pneumatiques ou hydrauliques classiques, un étage de régulation électronique avec ses capteurs et ses moyens de calcul, et des électrovannes ou des servovalves, pour transmettre aux organes mécaniques assurant la fonction de suspension proprement dite les ordres de changement de caractéristiques. Il s'agit par exemple de provoquer l'ouverture ou la fermeture d'un clapet dans un amortisseur, pour modifier la dissipation d'énergie qu'il provoque.

On connaît aussi de multiples propositions de suspensions actives, comme celles décrites dans les brevets ou demandes de brevet US 5,060,959, US 5,028,073, US 5,066,041, US 5,740,039 ou EP 0 878 333, pour n'en citer que quelques-unes. La diversité des dispositions constructives et des lois de pilotage proposées, à rapprocher du très petit nombre de suspensions actives sur le marché, est à l'image de la difficulté qu'il y a à piloter efficacement les suspensions. L'état de la technique se heurte au choix des paramètres de pilotage, à la correcte exploitation d'une multitude de signaux dont on pense avoir besoin pour appréhender correctement l'attitude d'un véhicule.

Dans un mode particulier de réalisation proposé dans la demande de brevet EP 0 878 333, un paramètre de réglage appelé a est piloté en temps réel pour ajuster la suspension entre un comportement accompagnateur de ressort ou suiveur de profil pur (α=1) et un comportement en amortisseur pur (α=0). Ce mode de fonctionnement est utile notamment pour amortir les vibrations d'un pneu. Il est proposé de détecter la survenance d'une résonance du pneu pour donner rapidement à a une valeur suffisamment inférieure à 1 (par exemple selon une loi de variation linéaire en fonction de l'amplitude) afin d'amortir les vibrations de la masse non suspendue.

L'objectif de l'invention vise à proposer une autre approche, rendant beaucoup moins utile la détection d'une résonance de la masse non suspendue, pour procurer un haut niveau de sécurité de fonctionnement des véhicules et un grand confort.

L'invention propose un dispositif de suspension, assurant le contrôle du débattement vertical entre une masse suspendue et une masse non suspendue, comportant une liaison élastique montée entre la masse suspendue et la masse non suspendue, ladite liaison élastique comprenant un ressort et comportant un vérin électrique réversible, agissant en parallèle du ressort pour contrôler les mouvements de débattement relatif entre masse suspendue et masse non suspendue, Z_{cr} étant la distance entre la masse suspendue et la masse non suspendue, ledit dispositif comportant des moyens de pilotage du vérin électrique pour, à partir d'une variation observée de la distance Z_{cr} entre la masse suspendue et la masse non suspendue, due à un débattement de la liaison élastique, que le vérin électrique développe un effort F. caractérisé en ce que l'effort F est une composante de compensation de masse F₁ = Cₐ.Mᵣ.A_{cr} orientée comme l'accélération A_{cr} du débattement de la masse non suspendue par rapport à la masse suspendue, avec Mr étant la masse non suspendue et Cₐ un coefficient, ainsi qu'une composante d'amortissement F₂ = -Cᵥ.V_{cr} s'opposant à la vitesse V_{cr} dudit débattement, Cᵥ étant un coefficient.

On appelle par convention "ensemble roulant " la totalité des organes que, pour une configuration de suspension donnée, l'on range habituellement dans la masse non suspendue. Pour une suspension du type décrit dans la demande EP 0 878 332, la masse non suspendue comporte, outre tous les organes en rotation autour de l'axe de rotation de la roue, le porte roue, le barreau, l'étrier de frein et le moteur électrique de traction (le moteur de suspension n'en fait pas partie). L'invention propose de développer dans le vérin électrique une composante d'effort qui tient compte de la masse non suspendue, ce qui tend à empêcher l'accumulation d'énergie dans celle-ci.

En outre et de préférence, le vérin électrique est piloté de façon à développer une composante d'accompagnement du ressort, créant un effort orienté comme le déplacement relatif entre caisse et roue, de façon à gommer les variations d'effort dues aux variations de débattement. Le vérin électrique du dispositif selon l'invention est dans ce cas préférable piloté par lesdits moyens de pilotage de façon à ce que le vérin électrique développe un effort F ayant en outre une composante d'accompagnement de ressort F₃ = Cₚ.K.Z_{cr}, orientée à l'inverse de la variation de force développée par le ressort et due à la variation de la distance Z_{cr}, K étant la raideur du ressort et Cp un coefficient.

Le rôle du vérin électrique est de limiter autant que possible les variations d'effort vues par la caisse. S'il n'y avait pas de variation d'effort, il n'y aurait pas d'accélération, donc pas de mouvement de caisse verticalement, donc le confort serait très grand. Le vérin électrique agit en permanence en correcteur de ressort afin d'écrêter radicalement les variations de force que sinon le ressort imposerait à la masse suspendue sous l'action de perturbations extérieures, tout en empêchant une accumulation d'énergie inacceptable dans la masse non suspendue. La fonction de ce correcteur de ressort consiste à modifier l'effort de réaction qu'aurait naturellement développé le ressort en réponse à une perturbation, en appliquant une stratégie de correction visant à procurer le meilleur confort possible tout en préservant la sécurité.

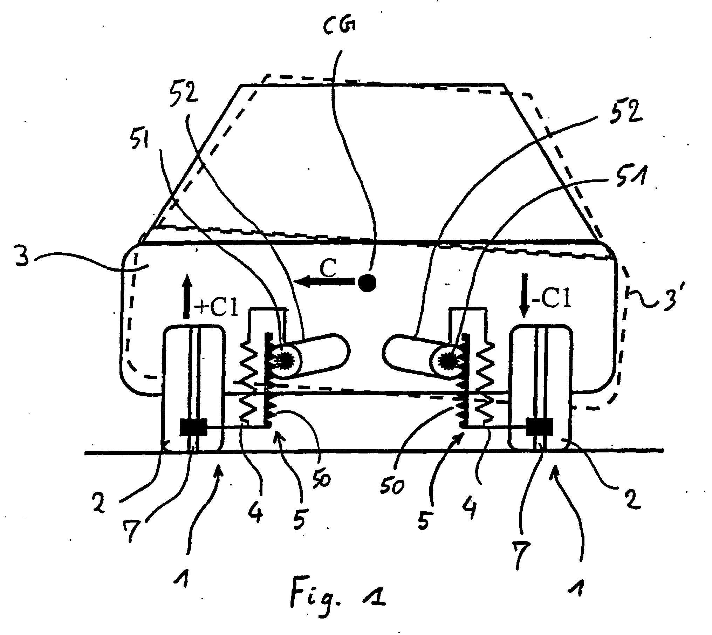

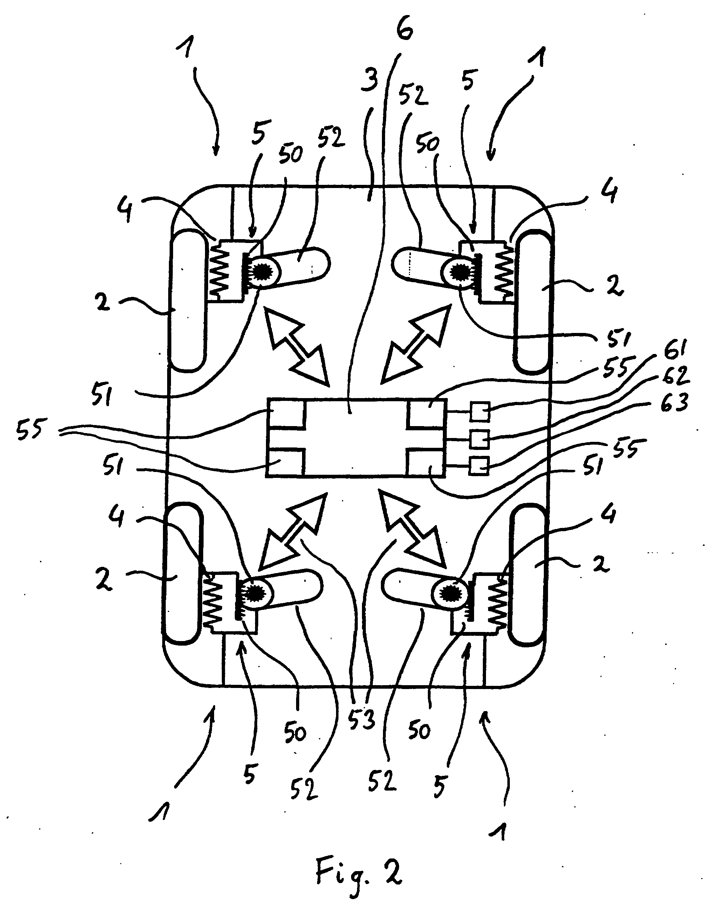

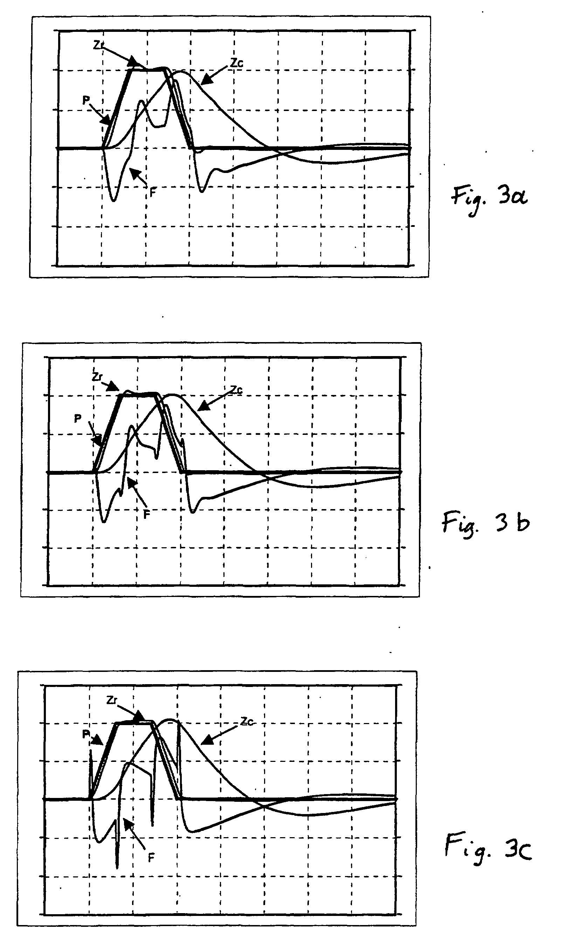

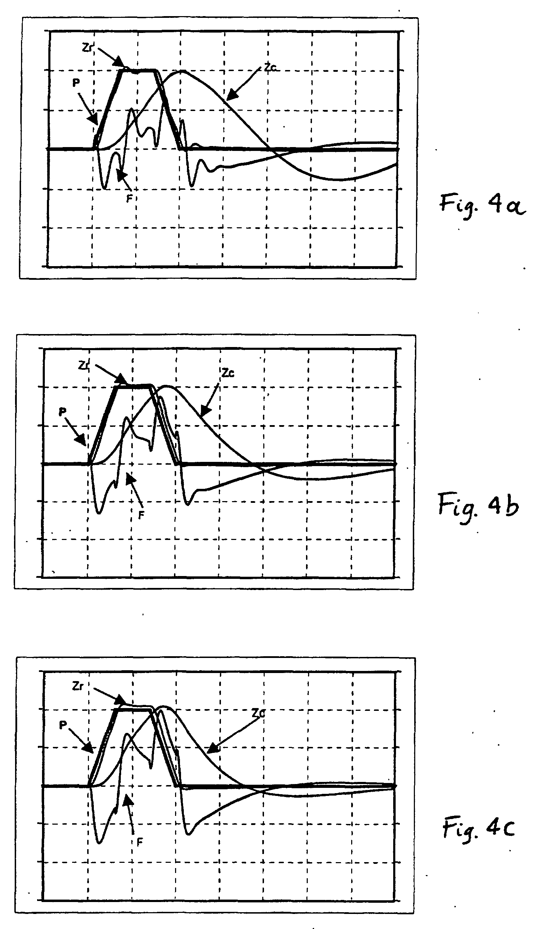

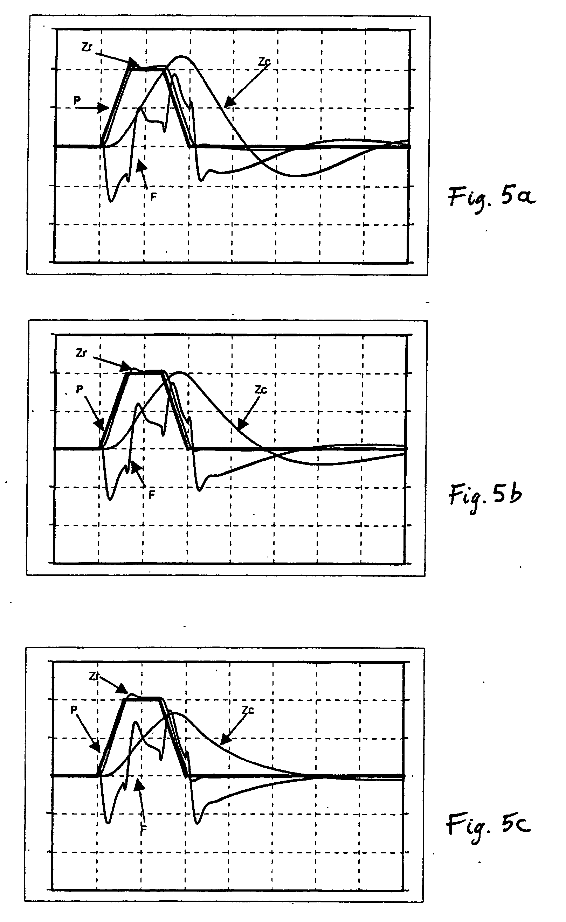

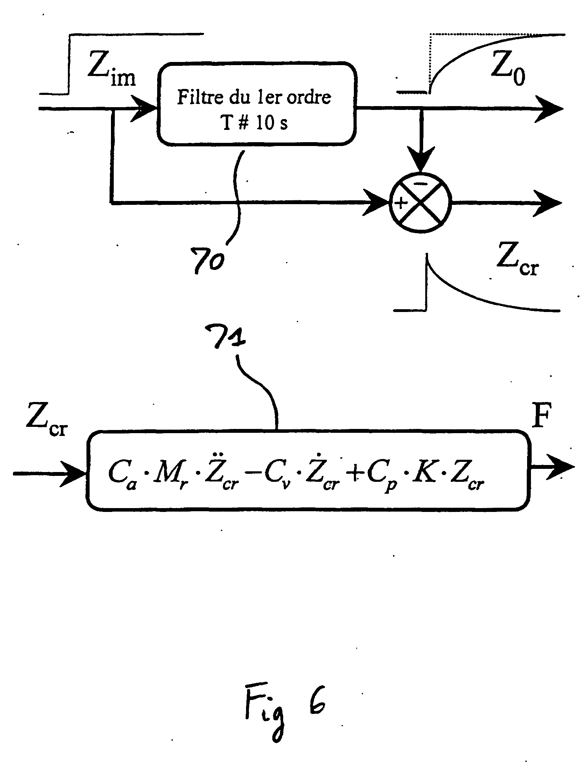

L'invention sera mieux comprise par la description qui va suivre, d'un exemple donné à titre non limitatif, en se référant au dessin annexé sur lequel :
■ la figure 1 montre un véhicule équipé d'une suspension selon l'invention,
■ la figure 2 est un schéma d'implantation sur un véhicule des principaux éléments de l'invention,
■ les figures 3a, 3b et 3c illustrent, en fonction du temps et en synchronisme, l'évolution du profil de la route, cause de la sollicitation de la suspension, le déplacement de la masse non suspendue qui en résulte, le déplacement de la masse suspendue qui en résulte, et l'évolution de l'effort dans le vérin électrique, pour plusieurs combinaisons des coefficients Cₐ, Cᵥ et Cₚ, dans lesquelles on augmente progressivement Cₐ en passant de la figure 3a à la figure 3c, Cᵥ et Cₚ étant constants.
■ les figures 4a, 4b et 4c illustrent les mêmes évolutions pour d'autres combinaisons des coefficients Cₐ, Cᵥ et Cₚ, dans lesquelles on augmente progressivement Cᵥ en passant de la figure 4a à la figure 4c, Cₐ et Cₚ étant constants
■ les figures Sa, 5b et 5c illustrent les mêmes évolutions pour d'autres combinaisons des coefficients Cₐ, Cᵥ et Cₚ, dans lesquelles on augmente progressivement Cₚ en passant de la figure 5a à la figure 5c, Cᵥ et Cₐ étant constants
■ la figure 6 représente l'invention sous la forme d'un schéma bloc.

On voit à la figure 1 en vue de face un véhicule de tourisme à quatre roues, équipé de liaisons élastiques 1 montées entre les roues 2 et la caisse 3. On voit à la figure 2 les quatre liaisons élastiques 1 montées entre les roues 2 et la caisse 3 du véhicule. Chaque liaison élastique comporte une coulisse verticale 7, un ressort hélicoïdal 4 et un vérin électrique 5 monté en parallèle. Le vérin électrique 5 comporte une crémaillère 50 solidaire de la partie non suspendue de la liaison au sol. Un moteur électrique 52 est fixé par sa carcasse à la partie suspendue de la liaison au sol. Un pignon 51 est monté sur le rotor du moteur et est engrené sur la crémaillère 50. Pour plus de détails sur une construction possible comportant un guidage du plan de roue par une coulisse verticale, on consultera la demande de brevet EP 0 878 332. Bien entendu, d'autres principes de liaison d'un ensemble roulant à une caisse peuvent être adoptés et sont compatibles avec l'utilisation d'un vérin électrique et d'un ressort montés en parallèle.

La caisse 3 représentée en traits continus ne subit pas de roulis. C'est son allure naturelle en roulage en ligne droite. La caisse 3' présente en revanche une légère surcompensation du roulis et l'on reviendra plus en détails sur cet aspect dans la suite.

On sait que, pour obtenir un effort donné dans un vérin électrique 5 tel que décrit ci-dessus, il faut que le moteur développe un couple déterminé. Le pilotage pour obtenir un effort déterminé dans le vérin électrique 5 revient donc à asservir le couple du moteur. Dans une variante tout particulièrement intéressante, on utilise un moteur électrique 52 de type synchrone auto piloté, à aimants permanents. Ce type de moteur comporte par construction des capteurs de position du rotor utilisés pour en assurer le pilotage, quelle que soit l'application. Utilisés dans cette application, ces capteurs mesurent en fait la variation de distance entre la roue 2 et la caisse 3. L'information venant des capteurs internes au moteur parvient à une unité 55 de pilotage individuel de roue, via les canaux 53.

L'unité 55 comporte les moyens électroniques pour exploiter l'information venant desdits capteurs internes au moteur en fonction d'une stratégie de pilotage telle que le vérin électrique développe un effort F = Cₐ.Mᵣ.A_{cr} - Cᵥ.V_{cr} + Cₚ.K.Z_{cr}. L'effort F comporte donc une composante de compensation de masse pondérée par le coefficient Cₐ, une composante d'amortissement pondérée par le coefficient Cᵥ et une composante d'accompagnement du ressort pondérée par le coefficient Cₚ. Les coefficients peuvent être choisis expérimentalement en fonction de valeurs de départ qui sont proposées ci-dessous.

Les figures 3a à 5c permettent de visualiser l'effet des différentes composantes. Sur ces figures, on a représenté le profil de la route, ce qui est équivalent à la variation (en ordonnées) de niveau du sol en fonction du temps (en abscisses) si l'on suppose que le véhicule roule à vitesse constante. C'est la courbe « P ». L'axe horizontal représente une référence déterminée par le niveau moyen de la route. Les ordonnées sont les écarts par rapport à ce niveau moyen. Le profil de la route comporte donc un premier palier sans déviation par rapport au niveau moyen, suivi d'une bosse au profil trapézoïdal, suivi d'un second palier sans déviation par rapport au niveau moyen. Toutes les figures se rapportent au franchissement du même obstacle, à savoir une élévation du niveau du sol suivie d'un retour au niveau initial (une bosse isolée). A toutes les figures, la courbe « Zᵣ » montre le déplacement de la roue (c'est à dire de la masse non suspendue) qui résulte du franchissement de l'obstacle pour une suspension ayant les caractéristiques illustrées respectivement par chacune des figures. A toutes les figures, la courbe « Z_{c} » illustre le déplacement de la caisse, c'est à dire de la masse suspendue, qui résulte du franchissement de l'obstacle pour une suspension ayant les caractéristiques illustrées respectivement par chacune des figures. Enfin, à toutes les figures, la courbe « F » illustre l'évolution de l'effort dans le vérin électrique 5 qui résulte du franchissement de l'obstacle pour une suspension ayant les caractéristiques illustrées respectivement par chacune des figures.

Les figures 3a, 3b et 3c illustrent l'effet de la compensation de la masse non suspendue par une variation du coefficient Cₐ, les coefficients Cᵥ et Cₚ ayant des valeurs constantes. Le coefficient Cₐ est nul à la figure 3a. On a observé des performances intéressantes en compensant jusqu'à environ 50% de la masse non suspendue. La valeur intermédiaire de la figure 3b correspond à une compensation d'environ 30% de la masse non suspendue. La valeur de la figure 3c correspond à une compensation d'environ 70% de la masse non suspendue. La perturbation imposée par le profil de la route et la réaction d'effort F ont pour résultat un déplacement de la masse non suspendue illustré par la courbe Zᵣ, et un déplacement de la caisse illustré par la courbe Z_{c}. On voit que le déplacement de la masse non suspendue suit bien plus fidèlement le profil de la route lorsque le coefficient Cₐ est non nul. Lorsque l'on adopte un poids plus grand pour cette composante, il n'y a pratiquement plus d'oscillation de la roue après le passage de l'obstacle, ce qui est très favorable à la sécurité. On voit aussi que quand le poids de cette composante grandit, le mouvement subit par la caisse est sensiblement non affecté. En conclusion, l'invention permet d'augmenter la sécurité sans dégrader le confort.

Les figures 4a, 4b et 4c illustrent l'effet de l'amortissement par une variation du coefficient Cᵥ, les coefficients Cₐ et Cₚ ayant des valeurs constantes. Le coefficient Cᵥ est faible à la figure 4a, est de valeur intermédiaire à la figure 4b, et de valeur plus élevée à la figure 4c. Pour choisir une valeur initiale de Cᵥ, on se donne comme critère que l'amplitude de la seconde oscillation soit atténuée de 90% par rapport à l'amplitude de la première. On voit par les courbes F qu'il s'établit dans le vérin électrique 5 un effort d'autant plus important que l'on augmente l'amortissement. La perturbation imposée par le profil de la route et la réaction d'effort F ont pour résultat un déplacement de la masse non suspendue illustré par la courbe Zᵣ, et un déplacement de la caisse illustré par la courbe Z_{c}. On voit que le déplacement de la masse non suspendue suit plus fidèlement le profil de la route pour les deux valeurs les plus élevées du coefficient Cᵥ. Il n'y a pratiquement pas d'oscillation de la roue après le passage de l'obstacle, ce qui est très favorable à la sécurité. En revanche, on voit que, si l'amplitude du mouvement de la caisse n'est guère affectée, la pente de la courbe est de plus en plus raide, signe d'une accélération bien plus importante, ce qui nuit au confort.

Les figures 5a, 5b et 5c illustrent l'effet de la compensation du ressort en modifiant sa raideur apparente comme expliqué dans la demande de brevet EP 0 878 333, par une variation du coefficient Cₚ, les coefficients Cₐ et Cᵥ ayant des valeurs constantes. Le coefficient Cₚ est nul à la figure 5a. Le coefficient Cₚ vaut 1 lorsque le vérin électrique fonctionne en suiveur de profil pur, au sens donné à cette expression dans le brevet précité. Ce coefficient n'est pas choisi indépendamment du ressort. Plus on choisit un ressort raide, plus il convient de donner du poids à cette composante si l'on veut préserver le confort. On a observé des performances intéressantes jusqu'à environ 80% d'un comportement en suiveur de profil pur. Le coefficient vaut 0.4 à la figure 5b et 0.8 à la figure 5c. On voit par les courbes F que, dès que la roue rencontre l'obstacle, il s'établit dans le vérin électrique 5 un effort qui comprime le ressort 4, ce qui permet à la roue 2 de monter sur l'obstacle en limitant l'accélération que subit la caisse 3. La perturbation imposée par le profil de la route et la réaction d'effort F ont pour résultat un déplacement de la masse non suspendue illustré par la courbe Zᵣ, et un déplacement de la caisse illustré par la courbe Z_{c}. On voit que le déplacement de la masse non suspendue suit un peu moins fidèlement le profil de la route lorsque le coefficient Cₚ est non nul. Il apparaît une légère oscillation de la masse non suspendue après la phase de compression initiale. On voit aussi que, surtout à la figure 5c, quand le poids de cette composante est très important, la caisse subit un mouvement d'amplitude moindre, et surtout que la pente de la courbe est moins raide, signe d'une accélération bien moindre, ce qui est très favorable au confort.

En conclusion, les figures 3b (configurations identiques aux figures 4b et 5b) et 5c illustrent de bonnes combinaisons de valeurs des coefficients. Il est cependant difficile de proposer des combinaisons ayant valeur universelle. Il convient de procéder expérimentalement afin de choisir ce qui convient le mieux à un véhicule donné. Mais contrairement aux suspensions conventionnelles, la recherche de la meilleure solution se fait ici par simple programmation. Il est donc bien plus rapide, plus efficace et plus économique de balayer un grand nombre de combinaisons de caractéristiques car il n'y a aucune pièce mécanique à changer.

Expliquons maintenant une possibilité (non limitative) de mise en oeuvre d'une relaxation de l'effort développé dans le vérin électrique. L'unité de pilotage 55 reçoit depuis les capteurs internes au moteur, via le canal 53, l'information sur la position instantanée mesurée "Zᵢₘ" du vérin électrique (voir figure 6). Un bloc fonction 70 de l'unité 55 recalcule en permanence la position d'équilibre, désignée par Zₒ, dans laquelle l'effort du ressort 4 compense exactement la charge statique de la caisse. Cette position d'équilibre Zₒ est par exemple obtenue en moyennant la valeur Zᵢₘ sur une période de temps relativement longue (par exemple de l'ordre de 10 secondes). A partir des informations Zᵢₘ et Zₒ, on peut déduire immédiatement et par différence l'écart Z_{cr} = Zᵢₘ - Zₒ par rapport à la position d'équilibre. L'unité 55 calcule en permanence l'effort F à exercer, selon une période d'échantillonnage prédéterminée (par exemple toutes les millisecondes). Au cours des calculs successifs, l'unité 55 adapte progressivement l'effort du vérin électrique aux écarts de débattement ayant un caractère permanent, afin de progressivement annuler la correction due à ceux-ci. C'est ce qui assure une certaine relaxation.

Ensuite, à partir de la valeur de Z_{cr}, de sa dérivée première (vitesse) et de sa dérivée seconde (accélération), un bloc fonction 71 calcule la valeur de F comme expliqué ci-dessus, compte tenu des choix effectués pour les coefficients.

De façon fort avantageuse, on peut, par un étage de pilotage global de l'ensemble des liaisons au sol du véhicule, assurer une compensation active du roulis et du tangage, phénomènes de variations d'assiettes bien connus, nuisibles à la fois au confort et à la sécurité.

On a vu à la figure 1 que la caisse 3 représentée en traits continus ne subit pas de roulis. C'est son allure naturelle en roulage en ligne droite. Notons que le centre de roulis de la caisse est situé sous le centre de gravité pour une suspension assurant un guidage des plans de roue par une coulisse verticale selon la demande de brevet EP 0 878 332. S'il apparaît une force centrifuge C agissant au centre de gravité CG, en dehors de toute correction active, la caisse s'inclinera vers l'extérieur du virage, d'un angle de roulis dépendant de la force centrifuge et de la flexibilité des suspensions.

Le dispositif de suspension selon l'invention comporte des moyens pour évaluer une telle sollicitation, non verticale et orientée parallèlement à la droite joignant les centres des aires de contact sur le sol des roues considérées, ici appartenant à un essieu puisque l'on expose le cas du roulis. On s'oppose à ce phénomène en développant dans les vérins électriques 5 une composante de correction +C₁ à l'extérieur du virage et -C₁ à l'intérieur du virage. En jouant sur l'amplitude de cette correction, on peut limiter l'angle de roulis, ou même le sur-compenser comme montré par la caisse 3' représentée en traits interrompus. On désigne ci-dessous le roulis et le tangage indistinctement par " variation d'assiette ".

Pour chaque liaison au sol, outre un pilotage individuel assuré par une unité de pilotage 55 permettant de créer dans ledit vérin électrique 5 un effort ayant au moins une composante de compensation de la masse non suspendue, d'amortissement et éventuellement de correction de ressort, comme expliqué ci-dessus, on ajoute une composante F₄ de correction d'assiette. Par exemple, en considérant un véhicule comportant au moins deux liaisons au sol forment un essieu, lesdites liaisons au sol étant montées de part et d'autre du plan médian de symétrie du véhicule, le pilotage est programmé de façon à créer un couple de correction d'assiette qui s'oppose au roulis. Ou encore, en considérant un véhicule comportant au moins deux liaisons au sol comportant une liaison au sol avant et une liaison au sol arrière, le pilotage est programmé de façon à créer un couple de correction d'assiette qui contrôle le tangage. Bien entendu, l'invention s'applique à un véhicule comportant au moins quatre liaisons au sol formant un essieu avant et un essieu arrière, le pilotage étant programmé de façon à créer un couple de correction d'assiette qui contrôle à la fois le roulis et le tangage.

Le pilotage des composantes de correction d'assiette est centralisé car il concerne globalement l'équilibre du véhicule. Il est assuré par une unité centrale 6. De préférence, pour un véhicule à quatre roues au moins, l'unité centrale 6 assure au moins une correction du roulis. Avantageusement, l'unité centrale 6 peut assurer ou assure en outre une correction de tangage du véhicule.

Bien entendu, si l'on compense à la fois le roulis et le tangage, chacune desdites liaisons au sol est susceptible de recevoir des moyens de pilotage des vérins électriques une consigne d'effort qui est la résultante d'une contribution pour la correction du roulis et d'une contribution pour la correction du tangage. Pour chaque vérin électrique, la composante globale de correction d'assiette est la somme algébrique d'une contribution relative au roulis et d'une contribution relative au tangage. En cas de roulis pur (pas de tangage) ou de tangage pur (pas de roulis), les composantes de correction sont de valeur absolue égales et sont orientées en sens opposés l'une de l'autre d'un côté et de l'autre du véhicule.

Poursuivons par l'exemple d'un roulis pur. Lesdites composantes de correction du roulis sont de valeur absolue égales et étant orientées en sens opposés l'un de l'autre dans chaque essieu (un essieu constituant un groupe de liaisons au sol), afin d'appliquer à la caisse 3 un couple d'antiroulis. Le roulis peut être compensé partiellement (dépense d'énergie moindre), ou totalement (meilleur confort, meilleur fonctionnement des pneus), ou même peut être surcompensé comme évoqué ci-dessus, pour améliorer plus radicalement encore le fonctionnement d'un véhicule comme une voiture de tourisme à quatre roues. Plus la compensation est importante, plus il faut être capable de développer un couple important dans les moteurs 52, et de le maintenir le temps que durent les sollicitations transversales (ou longitudinales), celles-ci étant bien plus longues que les sollicitations venant du caractère bosselé de la route, appelant la composante d'amortissement dont on parlera ci-dessous.

On peut utiliser des capteurs 61, 62, 63 comme par exemple des accéléromètres liés à la caisse pour évaluer une sollicitation non verticale. Il peut s'agir de l'accélération transversale et/ou de la vitesse de lacet (ayant le roulis pour conséquence). On peut aussi évaluer l'accélération longitudinale (ayant le tangage pour conséquence). Cette ou ces évaluations permettent de développer un ou des couples de correction d'assiette appropriés.

En variante, on peut utiliser des capteurs permettant d'évaluer des paramètres indicateurs des conditions de conduite du véhicule. C'est par exemple un capteur d'angle au volant, de pression des freins, d'action sur l'accélérateur, et un capteur de vitesse du véhicule. Cela peut permettre d'anticiper par rapport à l'instant auquel apparaissent des accélérations parallèles au sol (accélération transversale, longitudinale). On peut dans ce cas utiliser des stratégies de pilotage observant celles des actions du pilote, estimant les conséquences probables sur le roulis (et sur le tangage), et on détermine la correction d'assiette appropriée.

Il est bien entendu possible de provoquer une variation d'assiette de la masse suspendue en réponse à n'importe quel type de commande. Par exemple, même en l'absence d'accélération longitudinale appliquée à la caisse, on peut piloter les moyens de commande de façon à ce qu'un couple sur-compensant une accélération transversale soit accompagné d'une légère plongée volontaire du véhicule. Cet exemple n'est cité que pour faire comprendre qu'il existe une infinité de contrôles actifs possible.

De façon avantageuse, l'invention permet aussi de piloter en temps réel et très aisément la répartition entre l'essieu avant et l'essieu arrière desdites composantes de correction du roulis. Etant donné un couple global d'antiroulis agissant sur la caisse, plus la part de correction de roulis fournie par l'essieu arrière est importante, plus le véhicule tendra vers un comportement survireur, et inversement. On peut vaincre l'inertie de lacet du véhicule, par exemple en entrée de virage, en adoptant très fugitivement une part d'antiroulis plus grande à l'arrière, et ensuite on peut stabiliser la trajectoire du véhicule en lui conférant un caractère plus sous vireur par une part d'antiroulis devenant plus grande à l'avant. En comparant la trajectoire du véhicule souhaitée par le pilote à la trajectoire effective du véhicule, à la manière des dispositifs de stabilisation connus sous la désignation d'" ESP ", on peut obtenir un effet de stabilisation en agissant de façon dynamique sur la répartition de couple de correction de roulis entre l'avant et l'arrière du véhicule. L'invention s'applique donc, dans un mode de réalisation particulier, à un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition entre l'essieu avant et l'essieu arrière desdites composantes de correction d'assiette s'opposant au roulis.

De même, la correction en tangage d'une caisse de véhicule de tourisme à 4 roues dépend d'un couple de correction de tangage global, et l'on peut répartir de part et d'autre du plan de symétrie du véhicule, éventuellement par un pilotage en temps réel, les composantes de correction agissant sur le tangage. L'invention s'applique donc, dans un mode de réalisation particulier, à un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition de part et d'autre du plan médian de symétrie du véhicule desdites composantes de correction agissant sur le tangage.

Enfin, signalons ce qui concerne les coefficients Cₐ, Cᵥ et Cₚ, que ceux-ci peuvent être adaptés en temps réel pour par exemple créer l'effet d'une flexibilité variable (adaptation dynamique de Cₚ), un amortissement variable (adaptation dynamique de Cᵥ), ou pour diminuer l'accompagnement du ressort et/ou la compensation de la masse non suspendue (adaptation dynamique de Cp et/ou Cₐ) ou si par exemple une composante de correction d'assiette est introduite (voir ci-dessus), on peut diminuer la valeur des coefficients Cₚ et Cₐ, en raison du caractère inéluctablement limité de la puissance électrique disponible, pour donner la priorité à la correction d'assiette.

En dernière remarque, soulignons que l'on pourrait aussi, comme déjà indiqué dans la demande de brevet EP 0 878 333, apporter une correction de garde au sol (c'est à dire une correction de hauteur par rapport au sol) de la caisse, par exemple pour obtenir une garde au sol constante quelle que soit la charge statique du véhicule. Mais il faut alors accepter de consommer en permanence de l'énergie pour que la fraction de la charge excédant le poids mort du véhicule soit supportée par le vérin électrique. En effet, cela suppose qu'une fraction de la composante de correction d'assiette s'oppose en permanence à ladite charge excédant le poids mort, ce qui n'est pas incompatible avec le principe selon l'invention, mais nécessite l'établissement d'une composante constante de courant dans les vérins électriques. Il parait cependant préférable de se passer de correction de hauteur, ou de réserver la fonction correction de hauteur à un autre dispositif que ledit vérin électrique, cet autre dispositif agissant avec une grande constante de temps, et ne consommant de l'énergie que pendant la phase de correction.

## Revendications

1. Dispositif de suspension d'un véhicule, assurant le contrôle du débattement vertical entre une masse suspendue et une masse non suspendue, comportant une liaison élastique (1) montée entre la masse suspendue et la masse non suspendue, ladite liaison élastique (1) comprenant un ressort (4) et comportant un vérin électrique (5) réversible, agissant en parallèle du ressort (4) pour contrôler les mouvements de débattement relatif entre masse suspendue et masse non suspendue, Z_{cr} étant la distance entre un point de la masse suspendue et un point de la masse non suspendue, ledit dispositif comportant des moyens de pilotage du vérin électrique pour, à partir d'une variation observée de la distance Z_{cr}, due à un débattement de la liaison élastique, que le vérin électrique développe un effort F **caractérisé en ce que** l'effort F est une composante de compensation de masse F₁ = Cₐ.Mᵣ.A_{cr} orientée comme l'accélération A_{cr} du débattement de la masse non suspendue par rapport à la masse suspendue, avec Mr étant la masse non suspendue et Cₐ un coefficient, ainsi qu'une composante d'amortissement F₂ = -Cᵥ.V_{cr} s'opposant à la vitesse V_{cr} dudit débattement, Cᵥ étant un coefficient.

2. Dispositif selon la revendication 1 dans lequel le vérin électrique est piloté par lesdits moyens de pilotage de façon à ce qu'il développe un effort F ayant en outre une composante d'accompagnement de ressort F₃ = Cₚ.K.Z_{cr}, orientée à l'inverse de la variation de force développée par le ressort et due à la variation de la distance Z_{cr} causée par ledit débattement, K étant la raideur du ressort et Cp un coefficient.

3. Dispositif selon l'une des revendications 1 ou 2, dans lequel la valeur des coefficients est adaptée en temps réel en fonction de paramètres indicateurs des conditions de conduite du véhicule.

4. Dispositif de suspension selon l'une des revendications 1 à 3 dans lequel l'unité (55) calcule une position d'équilibre Zₒ pour la distance entre la masse suspendue et la masse non suspendue, dans laquelle l'effort du ressort (4) compense exactement la masse suspendue en moyennant la valeur absolue instantanée Zᵢₘ de la position relative de la masse non suspendue par rapport à la masse suspendue, et recalcule Z_{cr} = Zᵢₘ - Zₒ.

5. Dispositif selon l'une des revendications 1 à 4, dans lequel le vérin électrique (5) comporte un moteur électrique (52) de type synchrone auto piloté, à aimants permanents, et dans lequel les moyens de pilotage déterminent la variation de la position relative entre point suspendu et point non suspendu entièrement à partir d'une mesure de la variation de position délivrée par les capteurs intégrés au moteur électrique.

6. Dispositif de suspension globale d'un véhicule comportant une masse suspendue et au moins un groupe de deux liaisons au sol comportant un dispositif de suspension selon l'une des revendications 1 à 5, dans lequel les vérins électriques sont pilotés par lesdits moyens de pilotage de façon à ce qu'ils développent un effort F ayant en outre une composante de correction d'assiette F₄, ladite composante de correction d'assiette appliquant à ladite caisse un couple de correction d'assiette.

7. Dispositif selon la revendication 6 dans lequel les moyens de pilotage comportent des moyens pour évaluer une sollicitation non verticale appliquée à la masse suspendue et susceptible de provoquer une variation d'assiette de la masse suspendue et pour calculer la composante de correction d'assiette.

8. Dispositif selon la revendication 7, dans lequel lesdites au moins deux liaisons au sol forment un essieu, lesdites liaisons au sol étant montées de part et d'autre du plan médian de symétrie du véhicule, de sorte que ledit couple de correction d'assiette s'oppose au roulis.

9. Dispositif selon la revendication 7, dans lequel lesdites au moins deux liaisons au sol comportent une liaison au sol avant et une liaison au sol arrière, de sorte que ledit couple de correction d'assiette s'oppose au tangage.

10. Dispositif selon la revendication 7, pour un véhicule comportant au moins quatre liaisons au sol formant un essieu avant et un essieu arrière, dans lequel ledit couple de correction d'assiette s'oppose à la fois au roulis et au tangage.

11. Dispositif selon l'une des revendications 7 à 10, pour un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition entre l'essieu avant et l'essieu arrière desdites composantes de correction d'assiette s'opposant au roulis.

12. Dispositif selon l'une des revendications 7 à 11, pour un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition de part et d'autre du plan médian de symétrie du véhicule desdites composantes de correction s'opposant au tangage.

## Patentansprüche

1. Aufhängungsvorrichtung für ein Fahrzeug, die die Steuerung des vertikalen Durchfederns zwischen einer aufgehängten Masse und einer nicht aufgehängten Masse sicherstellt, mit einer elastischen Verbindung (1), die zwischen der aufgehängten Masse und der nicht aufgehängten Masse angebracht ist, wobei die genannte, elastische Verbindung (1) eine Feder (4) aufweist und einen umkehrbaren, elektrischen Stellantrieb (5) aufweist, der parallel zur Feder (4) wirksam ist, um die Bewegungen relativen Durchfederns zwischen der aufgehängten Masse und der nicht aufgehängten Masse zu steuern, Z_{cr} der Abstand zwischen einem Punkt der aufgehängten Masse und einem Punkt der nicht aufgehängten Masse ist, und die genannte Vorrichtung Mittel zum Steuern des elektrischen Stellantriebs aufweist, damit, von einer beobachteten Änderung des Abstandes Z_{cr} ausgehend, infolge eines Durchfederns der elastischen Verbindung, der elektrische Stellantrieb eine Kraft F entwickelt, **dadurch gekennzeichnet, daß** die Kraft F ein Massenausgleichsanteil F₁ = Cₐ.Mᵣ.A_{cr} ist, der wie die Beschleunigung A_{cr} des Durchfederns der nicht aufgehängten Masse in Bezug auf die aufgehängte Masse orientiert ist, wobei Mᵣ die nicht aufgehängte Masse und Cₐ ein Beiwert ist, so daß sich ein Dämpfungsanteil F₂ = -Cᵥ.V_{cr} der Geschwindigkeit V_{cr} dem genannten Durchfedern entgegensetzt, wobei Cᵥ ein Beiwert ist.

2. Vorrichtung nach Anspruch 1, worin der elektrische Stellantrieb von den genannten Steuermitteln derart gesteuert wird, daß er eine Kraft F entwickelt, die außerdem einen Feder-Begleitanteil F₃ = Cₚ.K.Z_{cr} aufweist, der umgekehrt zur Änderung der Kraft orientiert ist, die durch die Feder und aufgrund der Änderung des Abstandes Z_{cr} entwickelt wird, der durch das genannte Durchfedern veranlaßt wird, wobei K die Steifigkeit der Feder und Cp ein Beiwert ist.

3. Vorrichtung nach einem der Ansprüche 1 oder 2, worin der Wert der Beiwerte in Echtzeit in Funktion der Parameter angepaßt wird, die die Fahrbedingungen des Fahrzeugs angeben.

4. Vorrichtung nach einem der Ansprüche 1 bis 3, worin die Einheit (55) eine Gleichgewichtslage Zₒ für den Abstand zwischen der aufgehängten Masse und der nicht aufgehängten Masse errechnet, in welcher die Kraft der Feder (4) genau die aufgehängte Masse kompensiert, indem sie den gegenwärtigen Absolutwert Zᵢₘ der Relativlage der nicht aufgehängten Masse bezüglich der aufgehängten Masse mittelt, und erneut Z_{cr} = Zᵢₘ- Zₒ errechnet.

5. Vorrichtung nach einem der Ansprüche 1 bis 4, worin der elektrische Stellantrieb (5) einen Elektromotor (52) aufweist, der dem Typ nach ein selbstgesteuerter Synchronmotor mit Permanentmagneten ist, und worin die Steuermittel die Änderung der Relativlage zwischen dem aufgehängten Punkt und dem nicht aufgehängten Punkt gänzlich aus einer Messung der Änderung der Lage bestimmen, die von in den Elektromotor integrierten Meßfühlern geliefert wird.

6. Gesamt-Aufhängungsvorrichtung eines Fahrzeugs, das eine aufgehängte Masse und mindestens eine Gruppe von zwei Verbindungen mit dem Boden mit einer Aufhängungsvorrichtung nach einem der Ansprüche 1 bis 5 aufweist, worin die elektrischen Stellantriebe durch die genannten Steuermittel derart gesteuert werden, daß sie eine Kraft F entwickeln, die außerdem einen Trimmungs-Korrekturanteil F₄ aufweist, wobei der genannte Trimmungs-Korrekturanteil an den genannten Aufbau ein Moment zur Korrektur der Trimmung aufbringt.

7. Vorrichtung nach Anspruch 6, worin die Steuermittel Mittel zum Bewerten einer nicht vertikalen Belastung aufweisen, die auf die aufgehängte Masse aufgebracht wird und in der Lage ist, eine Änderung der Trimmung der aufgehängten Masse hervorzurufen, und zum Berechnen des Trimmungs-Korrekuranteils.

8. Vorrichtung nach Anspruch 7, worin die genannten, mindestens zwei Verbindungen mit dem Boden eine Achse bilden, wobei die genannten Verbindungen mit dem Boden beiderseits der Symmetrie-Mittelebene des Fahrzeugs derart angebracht sind, daß das genannte Trimmungs-Korrekturmoment sich dem Rollen entgegensetzt.

9. Vorrichtung nach Anspruch 7, worin die genannten, mindestens zwei Verbindungen mit dem Boden eine vordere Verbindung mit dem Boden und eine hintere Verbindung mit dem Boden aufweisen, so daß das genannte Trimmungs-Korrekturmoment sich dem Nicken entgegensetzt.

10. Vorrichtung nach Anspruch 7, für ein Fahrzeug, das mindestens vier Verbindungen mit dem Boden aufweist, die eine vordere Achse und eine hintere Achse bilden, worin sich das genannten Trimmungs-Korrekturmoment gleichzeitig dem Rollen und dem Nicken entgegensetzt.

11. Vorrichtung nach einem der Ansprüche 7 bis 10, für ein Fahrzeug, das mindestens eine Vorderachse und eine Hinterachse aufweist, die jeweils zwei Verbindungen mit dem Boden aufweisen, die beiderseits der Symmetrie-Mittelebene des Fahrzeugs angebracht sind, wobei die genannten Steuermittel in Echtzeit die Aufteilung der genannten Trimmungs-Korrekturanteile steuern, die sich dem Rollen entgegensetzen.

12. Vorrichtung nach einem der Ansprüche 7 bis 11, für ein Fahrzeug, das mindestens eine Vorderachse und eine Hinterachse aufweist, die jeweils zwei Verbindungen mit dem Boden aufweisen, die beiderseits der Symmetrie-Mittelebene des Fahrzeugs angebracht sind, wobei die genannten Steuermittel in Echtzeit die Aufteilung der genannten Korrekturanteile, die sich dem Nicken entgegensetzen, beiderseits der Symmetrie-Mittelebene steuern.

## Claims

1. Vehicle suspension device, for controlling the vertical deflection between a suspended mass and a non-suspended mass, comprising an elastic link (1) mounted between the suspended mass and the non-suspended mass, the said elastic link (1) comprising a spring (4) and comprising a reversible electric actuator (5) acting in parallel with the spring (4) for controlling the relative-deflection movements between suspended mass and non-suspended mass, Z_{cr} being the distance between a point on the suspended mass and a point on the non-suspended mass, the said device comprising means for controlling the electric actuator in order, from an observed variation of the distance Z_{cr}, due to a deflection of the elastic link, that the electric actuator develops a force F, **characterised in that** the force F is a mass compensation component F₁ = Cₐ.Mᵣ.A_{cr} oriented like the acceleration A_{cr} of the deflection of the non-suspended mass with respect to the suspended mass, with Mᵣ being the non-suspended mass and Cₐ a coefficient, and also a damping component F₂ = -Cᵥ.V_{cr} opposing the speed V_{cr} of the said deflection, Cᵥ being a coefficient.

2. Device according to Claim 1, in which the electric actuator is controlled by the said control means so that it develops a force F additionally having a spring-accompanying component F₃ = Cₚ.K.Z_{cr}, oriented opposite to the variation of the force developed by the spring and due to the variation of the distance Z_{cr} caused by the said deflection, K being the stiffness of the spring and Cₚ a coefficient.

3. Device according to one of Claims 1 or 2, in which the value of the coefficients is adapted in real time in accordance with parameters indicating vehicle driving conditions.

4. Suspension device according to one of Claims 1 to 3, in which the unit (55) calculates an equilibrium position Zₒ for the distance between the suspended mass and the non-suspended mass, in which the force of the spring (4) exactly compensates the suspended mass by averaging the instantaneous absolute value Zᵢₘ of the relative position of the non-suspended mass with respect to the suspended mass, and recalculates Z_{cr} = Zᵢₘ - Zₒ.

5. Device according to one of Claims 1 to 4, in which the electric actuator (5) comprises an electric motor (52) of the automatically controlled synchronous type, with permanent magnets, and in which the control means determine the variation of the relative position between suspended point and non-suspended point entirely from a measurement of the position variation delivered by the sensors integrated in the electric motor.

6. Device for the overall suspension of a vehicle comprising a suspended mass and at least one group of two wheel connecting systems comprising a suspension device according to one of Claims 1 to 5, in which the electric actuators are controlled by the said control means so that they develop a force F additionally having a trim correction component F₄, the said trim correction component applying a trim correction torque to the said body.

7. Device according to Claim 6, in which the control means comprise means for evaluating a non-vertical stress applied to the suspended mass and likely to cause a variation of the trim of the suspended mass and for calculating the trim correction component.

8. Device according to Claim 7, in which the said at least two wheel connecting systems form an axle, the said wheel connecting systems being mounted on either side of the median plane of symmetry of the vehicle, so that the said trim correction torque opposes the rolling.

9. Device according to Claim 7, in which the said at least two wheel connecting systems comprise a front wheel connecting system and a rear wheel connecting system, so that the said trim correction torque opposes the pitching.

10. Device according to Claim 7, for a vehicle comprising at least four wheel connecting systems forming a front axle and a rear axle, in which the said trim correction torque opposes both the rolling and the pitching.

11. Device according to one of Claims 7 to 10, for a vehicle comprising at least one front axle and one rear axle each having two wheel connecting systems mounted on either side of the median plane of symmetry of the vehicle, the said control means controlling the distribution between the front axle and the rear axle of the said trim correction components opposing the rolling in real time.

12. Device according to one of Claims 7 to 11, for a vehicle comprising at least one front axle and one rear axle each having two wheel connecting systems mounted on either side of the median plane of symmetry of the vehicle, the said control means controlling the distribution on either side of the median plane of symmetry of the vehicle of the said correction components opposing the pitching in real time.
